# EUROPÄISCHE PATENTSCHRIFT

(11) **EP 1 250 631 B1**
(45) Veröffentlichungstag und Bekanntmachung des Hinweises auf die Patenterteilung: **19.05.2004**
(21) Anmeldenummer: 01909629.6
(22) Anmeldetag: 16.01.2001
(51) Int. Cl.: G05B 19/042

(54) **STEUERUNG FÜR EINE INDUSTRIENÄHMASCHINE**
CONTROL SYSTEM FOR AN INDUSTRIAL SEWING MACHINE
COMMANDE DE MACHINE A COUDRE INDUSTRIELLE

(30) Priorität: 25.01.2000 DE 10002931
(43) Veröffentlichungstag der Anmeldung: 23.10.2002
(73) Patentinhaber: Frankl & Kirchner GmbH. & Co. KG Fabrik für Elektromotoren und elektrische Apparate, D-68723 Schwetzingen (DE)
(72) Erfinder: NOHL, Gerd, Friedrich, 69231 Rauenberg (DE)
(74) Vertreter: Schneck, Herbert, Dipl.-Phys., Dr.
(86) Internationale Anmeldenummer: PCT/EP2001/000416
(87) Internationale Veröffentlichungsnummer: WO 2001/055804

(56) Entgegenhaltungen:
- EP-A- 0 182 281
- EP-A- 0 249 160
- DE-A- 4 000 765
- DE-A- 4 201 774
- DE-U- 8 803 371
- US-A- 4 412 163
- US-A- 5 947 043

## Beschreibung

Die Erfindung betrifft eine Steuerung für eine Industrienähmaschine mit einer in oder am Nähmaschinenkopf angeordneter Motorsteuerung und einer in einem besonderen Bedienteil untergebrachten Nähablaufsteuerung, wobei Bedienteil und Motorsteuerung über eine bidirektionale Schnittstelle verbunden sind, und wobei Solenoide und digitale Schalteingänge umfassende Aktoren, wie Fadenwischer, Fadenabschneider und dergleichen von der Steuerung angesteuert werden.

Eine Steuerung der gattungsgemäßen Art ist aus DE 40 00 765 C2 bekannt. Gemäß dieser Veröffentlichung wird über eine serielle Schnittstelle sowohl die Motorlaufsteuerung als auch die Steuerung der Aktoren bewerkstelligt.

In DE 42 01 774 A1 wird eine zentral aufgebaute Steuerung beschrieben. Ein DIP-Schalter, ein Drehschalter und ein Solenoidtreiber greifen auf einen Mikrocomputer zu. Von dem Solenoidtreiber verlaufen Stichleitungen zu den Aktoren. Die jeweiligen Stecker sind in einem Steuerkasten untergebracht.

In DE-U-88 03 371 ist eine Leiterplatte dargestellt, die in herkömmlicher Weise in einen Steuerkasten eingebaut wird. Über Stecker werden Verbindungen zu den Aktoren hergestellt. Die Ansteuerleistung zum Betrieb der Magnete wird über Verbindungsleitungen geführt und mittels Informationsverarbeitung werden Leistungsbauelemente gesteuert. Alle Bauelemente zur Ansteuerung der Magnete sind zentral in dem Steuerkasten untergebracht.

Hiervon ausgehend liegt der Erfindung die Aufgabe zugrunde, eine derartige Steuerung so auszubilden, daß die Verdrahtung in einfacher und übersichtlicher Weise bereits im Herstellerwerk kostengünstig erfolgen kann und die Steuerung hardwaremäßig von den spezifischen Nähmaschinentypen unabhängig wird.

Diese Aufgabe wird erfindungsgemäß dadurch gelöst, daß über die Motorsteuerung das Hoch- und Herunterlaufen und die Drehzahl des Motors steuerbar ist, die Ansteuerung der Aktoren gesondert hiervon über einen seriellen Bus erfolgt, wobei der serielle Bus als BBOBI (Bit Bit Out Bit In)-Bus ausgebildet ist und eine Mehrzahl von jeweils einem Aktuator zugeordneter Knoten-Schaltungsanordnungen umfaßt.

Dabei ist insbesondere vorgesehen, daß der Bus als 3-Draht-Bus ausgebildet ist, umfassend eine Datenleitung und zwei Versorgungsleitungen. Der Bus wird durch jeden Knoten durchgeschleift. Der jeweilige Knoten zapft die drei Leitungen an. Die Nähsteuerung bedient die Datenleitung, das Übertragungsprotokoll besteht vorteilhafterweise aus einem Startbit und acht Datenbits. Mittels der vorgesehenen Hintereinanderschaltung der Knoten horchen alle Knoten parallel das Übertragungsprotokoll ab: Nach der Übertragung übernimmt der angesprochene Knoten für kurze Zeit die Kontrolle über die Datenleitung und gibt in einem vorgegebenen Zeitfenster ein "OK" an die Ablaufsteuerung zurück.

Die Ablaufsteuerung erkennt hieraus, daß die jeweilige Knoten-Schaltungsanordnung reagiert hat.

Durch die erfindungsgemäße Ausgestaltung wird eine einfache und übersichtliche Verdrahtung in und an der Maschine unter Vermeidung von Kabelgewirr erzielt, wobei jederzeit Erweiterungsmöglichkeiten bestehen und die Verdrahtung bereits im Herstellerwerk kostengünstig realisiert werden kann.

Die Ablaufsteuerung ist außerdem frei von Ansteuerelementen für Aktuatoren und dem zugehörigen Netzteil und daher wesentlich kleiner, wobei das Netzteil für die Aktuatoren dezentral untergebracht werden kann. In der kompletten Steuerung gibt es jeweils nur die tatsächlich erforderliche Anzahl von Ansteuerelementen. Da die Bus-Knotenpunkte und die Aktuatoren eine Einheit bilden und diese bereits im Herstellerwerk des Nähmaschinenproduzenten eingebaut werden, ist zum Zeitpunkt der Montage bekannt, ob Leistungselektromagnete oder Magnetventile zum Betrieb der Aktuatoren vorgesehen sind. Davon abhängig können unterschiedlich große Netzteile benutzt werden. Netzteile für Magnetventile sind wesentlich kleiner und verursachen daher wesentlich geringere Kosten.

Der Bus unterscheidet einen "Write"- und einen "Read"-Zustand. Bei "Write" können pro Adresse zwei Bits ausgegeben werden. Im "Read"-Zustand wird anstelle des obenerwähnten "OK" der Schaltpegel eines am Knoten anschließbaren-Ein/Aus-Schalters, für kurze Zeit auf die Datenleitung gelegt.

Die Eingangsschalter können an die nächstgelegene Knoten-Schaltungsanordnung angeschlossen werden, wobei die Zuordnung softwaremäßig realisierbar ist.

Zur Erzielung einer optimalen Dezentralisierung ist der Umrichter und die Motorsteuerung ebenso wie der Motor in oder an der Nähmaschine angeordnet, wobei die Steuerung über einen digitalen Signalprozessor (DSB), z.B. ADMC328, bewerkstelligt wird. Umrichter und Motorsteuerung steuern das Beschleunigen, Drehen, Bremsen und Positionieren der Nadel völlig eigenständig. Dieser Teil der Gesamtsteuerung ist beispielsweise in einem ROM festgeschrieben. Demgegenüber ist das Nähprogramm in der Ablaufsteuerung enthalten. Diese Steuerung ist außerhalb der Nähmaschine in oder am Bedienteil angeordnet. Das Nähprogramm kann modular aufgebaut und vom Anwender selbst erstellt werden. Die Betriebssoftware für den Nähvorgang liegt in der Ablaufsteuerung und wird nur dann ergänzt, falls neue Module eingeführt werden müssen. Ein solches Modul bedient der erfindungsgemäße Bus. Falls der Anwender den Bus erweitert, muß er dies auch in seinem Anwenderprogramm tun, wobei die Zeitpunkte der Aktivierung oder Deaktivierung und die Reaktionen auf die Schaltzustände der Eingangssignale bestimmt werden müssen.

In weiterer Ausgestaltung der Erfindung ist vorgesehen, daß jeder Knoten-Schaltungsanordnung ein Knoten-Schaltungselement (IC), Ausgangsschaltelemente, wie Schalttransistoren, Relais oder dergleichen, Einstellelemente, wie DIP-Schalter, Drehcodierschalter oder dergleichen sowie Anschlußelemente umfaßt.

Weiterhin ist günstigerweise vorgesehen, daß die Knoten-Schaltungsanordnungen auf einer in einem Gehäuse untergebrachten Leiterplatte angeordnet sind.

Vorteilhafterweise werden zwei unterschiedliche Knoten-Schaltungsanordnungen vorgesehen, einerseits eine Anordnung für Leistungselektromagnete mit Taktungselementen und andererseits eine Anordnung für Magnetventile ohne Taktung, mit ständiger Vollsteuerung.

Eine besonders kompakte Bauweise wird dadurch erzielt, daß die Knoten-Schaltungsanordnungen direkt an den Aktuatoren montiert oder in diese integriert sind.

Die Knoten-Schaltungsanordnungen sind untereinander derart verbunden, daß der Ausgang einer Knoten-Schaltungsanordnung mit dem Eingang einer darauffolgenden Knoten-Schaltungsanordnung verbunden ist.

Der Ausgang der letzten Knoten-Schaltungsanordnung kann zur Ermöglichung einer Selbstdiagnose mit der Ablaufsteuerung verbunden sein.

Jedes Knoten-Schaltungselement ist vorteilhafterweise als frei programmierbarer Schaltkreis (FPGA = Field Programmable Gate Arreay) ausgebildet.

Nachfolgend wird die Erfindung anhand eines bevorzugten Ausfuhrungsbeispiels in Verbindung der Zeichnung näher erläutert. Dabei zeigen:
- Fig. 1: eine Aufsicht auf eine Leiterplatte mit der Knoten-Schaltungsanordnung für einen Solenoid mit einstellbarer Taktung,
- Fig. 2: eine Aufsicht auf eine Leiterplatte der Knoten-Schaltungsanordnung für ein Magnetventil,
- Fig. 3: eine blockschaltbildartige Darstellung der erfindungsgemäßen Steuerung,
- Fig. 4: ein Blockschaltbild des Knotenschaltteils (IC) und
- Fig. 5: ein Zeitdiagramm zur Veranschaulichung des Timings eines erfindungsgemäßen BBOBI-Buses.

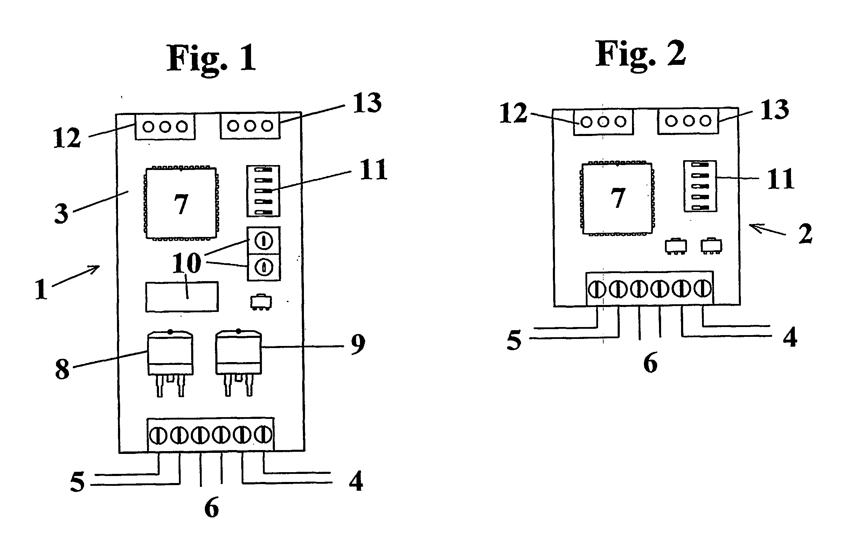

Wesentliche Bauelemente einer erfindungsgemäßen Steuerung sind die in Fig. 1 und 2 dargestellten Knoten-Schaltungsanordnungen 1 bzw. 2.

Die Knoten-Schaltungsanordnung 1 ist auf einer Leiterplatte 3 angeordnet. Sie umfaßt einen Schalt-Eingang 4, einen Ausgang 5 für einen getakteten Solenoiden und einen Ausgang 6 für eine Anzeige in Form einer LED.

Auf der Leiterplatte 3 ist ein Knoten-Schaltungselement 7 in Form einer frei programmierten integrierten Schaltung, insbesondere als FPGA, angeordnet, sowie ein Leistungstransistor 8 und eine TRIAC 9 sowie mit 10 bezeichnete weitere Einstellkomponenten zur Erzeugung einer getakteten Spannung für das jeweilige Solenoid.

Diese Bauteile 8, 9, 10 fehlen bei der Knoten-Schaltungsanordnung 2 gemäß Fig. 2, da diese lediglich für die Ansteuerung von Magentventilen bestimmt ist. Zur Adressierung der jeweiligen Knoten-Schaltungsanordnung 1 bzw. 2 dient eine programmierbare Adressenschaltung 11. Weiterhin weisen die Knoten-Schaltungsanordnungen 1, 2 Eingänge 12 und Ausgänge 13 für das Durchschleifen des erfindungsgemäßen BBOBI-Bus auf. Hierfür sind dreipolige Stecker vorgesehen, wobei der Ausgang 13 einer vorhergehenden Knoten-Schaltungsanordnung 1, 2 mit dem Eingang 12 einer nachfolgenden Knoten-Schaltungsanordnung 1, 2 verbunden wird.

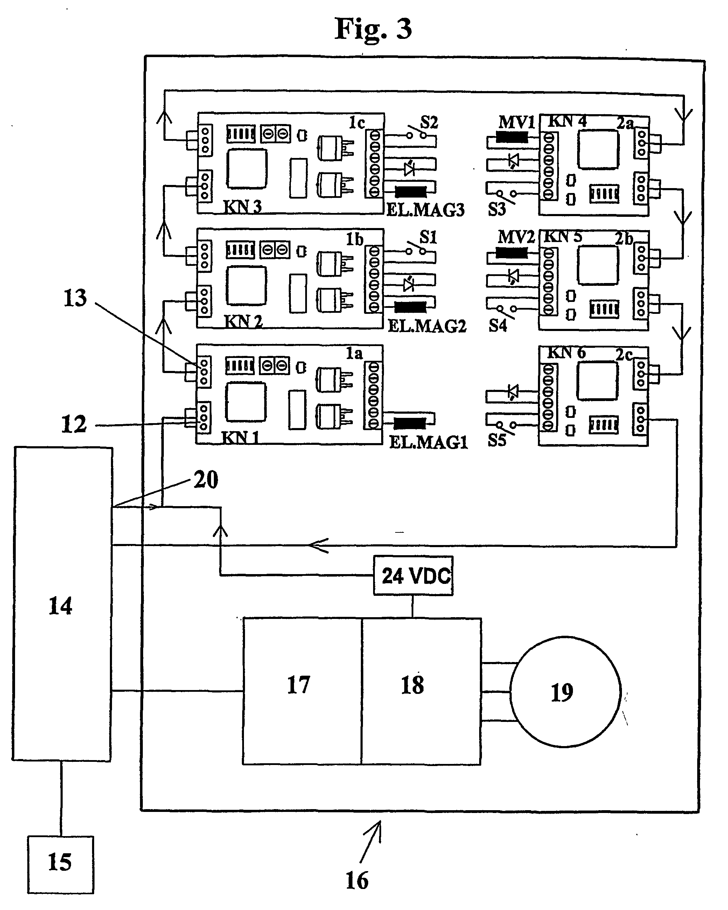

In Fig. 3 ist schematisch eine erfindungsgemäße Steuerung dargestellt, die unter Verwendung von in Fig. 1 und 2 dargestellten Knoten-Schaltungsanordnungen 1, 2 aufgebaut ist.

Eine Ablaufsteuerung 14 mit einem zugeordneten Pedal 15 ist in an sich bekannter Weise gesondert von einer Nähmaschine 16 angeordnet. Demgegenüber ist an der Nähmaschine 16 selbst eine Motorsteuerung 17, ein Umrichter 18 und ein Motor 19 angeordnet. Eine 24 V-Gleichspannung wird dem Eingang 12 der ersten Knoten-Schaltungsanordnung 1a zugeführt. Dort liegt auch der Ausgang 20 der Ablaufsteuerung 14 an.

Der Ausgang 13 der ersten Knoten-Schaltungsanordnung 1a ist mit dem Eingang 12 der zweiten Knoten-Schaltungsanordnung 1b, deren Ausgang 13 mit dem Eingang 12 der dritten Knoten-Schaltungsanordnung 1c verbunden. Diese ersten drei Knoten-Schaltungsanordnungen 1a, 1b, 1c dienen zur getakteten Ansteuerung eines Solenoids (EL.MAG1, EL.MAG2, EL.MAG3). Die nachfolgenden vierten, fünften und sechsten Knoten-Schaltungsanordnungen 2a, 2b, 2c sind in gleicher Weise miteinander verbunden. Sie dienen zur Ansteuerung von Magnetventilen MV1, MV2.

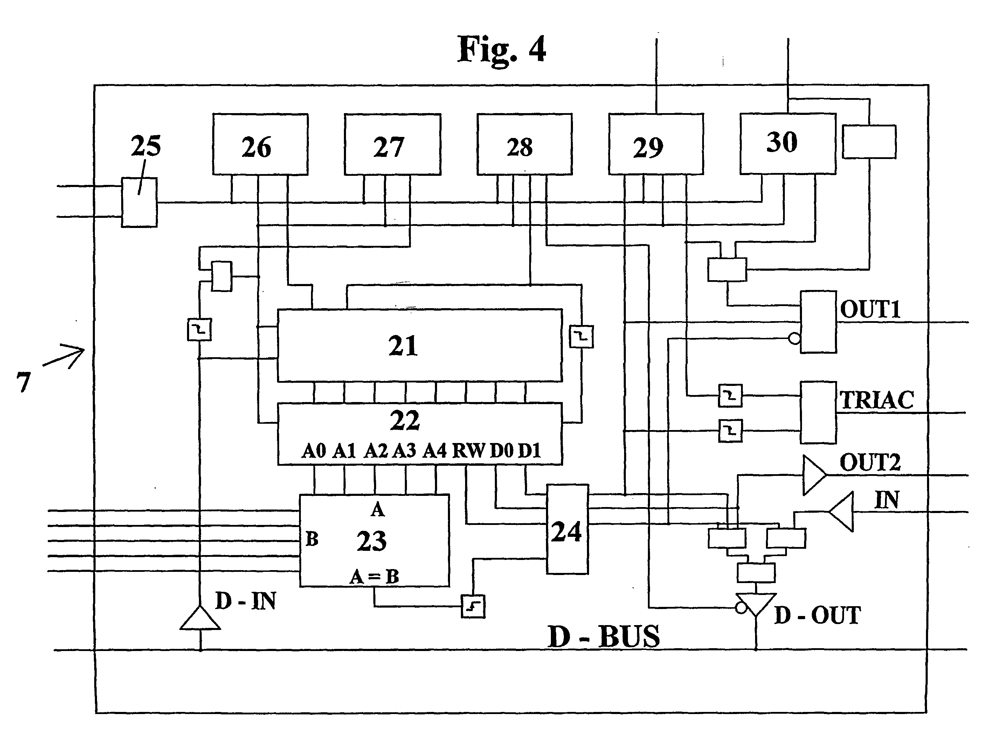

In Fig. 4 ist ein Blockschaltbild eines frei programmierbaren Knoten-Schaltungselements 7 in Form eines FPGA (= Field Programmable Gate Arreay) dargestellt. Dieses Schaltungselement umfaßt als wesentliche Bauteile ein Datenschieberegister 21 und ein Datenspeicherregister 22 sowie einen Komparator 23 und drei nachgeordnete Halte-Flip-Flops 24. Weiterhin sind ein Oszillator 25, ein Datenblock-Generator 26, ein Time-Out-Counter 27, Daten-Ende-Gounter 28, eine Magnet-Vollansteuerung 29 und eine Magnet-Taktung 30 vorgesehen.

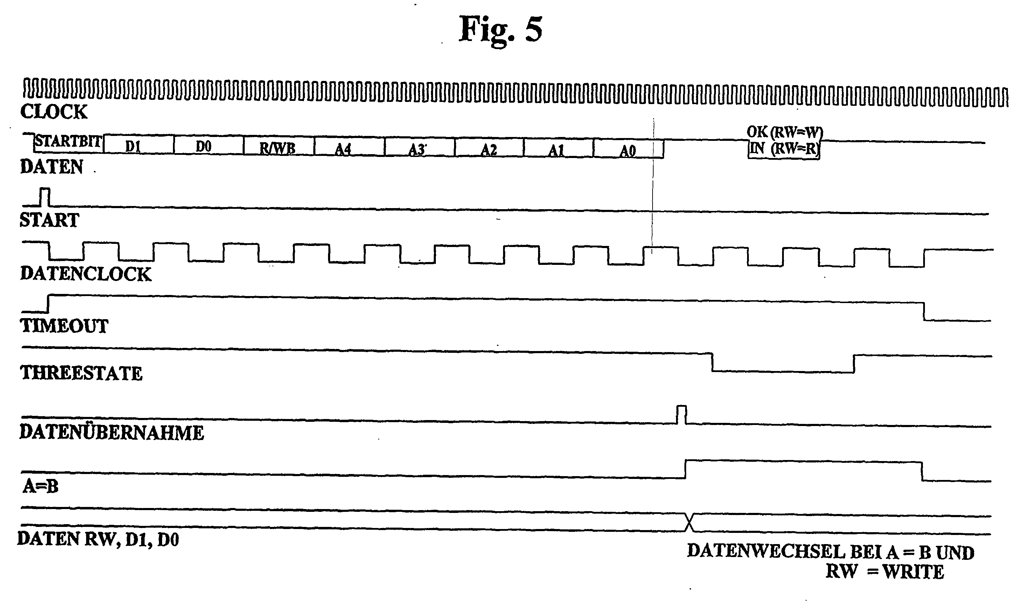

Die Arbeitsweise dieses Knoten-Schaltungselements wird nachfolgend in Verbindung mit Fig. 5 näher erläutert:

Das Übertragungsprotokoll besteht aus einem Startbit, acht Datenbits und einem Return-Bit. Die acht Datenbits sind wie folgt aufgeteilt:
- Fünf Bits für die Adresse: (A0 ... A4)
- Zwei Bits für die Datenausgabe: (D0, D1)
- Ein Bit für Read/Write: (R/WB)

Während der Übertragung der Startbits und der Datenbits treibt die Ablaufsteuerung 14 in der Funktion einer Mastersteuerung den D-Bus, wobei alle Knoten-Schaltungsanordnungen 1, 2 an dem D-Bus horchen. An einem Schalter in Form eines 5-Bits DIP Switches wird die Adresse 11 der Knoten-Schaltungsanordnung 1, 2 auf der jeweiligen Leiterplatte 3 eingestellt. In der Regel verfügt jede Knoten-Schaltungsanordnung 1, 2 über eine eigene Adresse, wobei dementsprechend 31 unterschiedliche Adressen realisierbar sind.

Spricht die Ablaufsteuerung 14 eine dieser Knoten-Schaltungsanordnungen 1, 2 an, so detektiert dies der 5-Bit-Komparator 23 im Knoten-Schaltungselement 7. Je nach dem Pegel R/WB erfolgt eine Schreib- oder Leseoperation. Die Übertragungsgeschwindigkeit ist fest vorgegeben und wird möglichst hoch angesetzt. Die angeschlossenen Schalteingänge 4 werden je nach Priorität mehr oder minder oft von der Ablaufsteuerung 14 angesprochen und deren Schaltzustand abgefragt. Die Ausgänge 4, 5 werden nach Bedarf geschaltet.

Die Datenausgabe, also das Schreiben wird wie folgt bewerkstelligt:

Die Zustände der Bits D0 und D1 werden auf die Ausgänge Out 1 und Out 2 gelegt. Out 2 ist das direkte Abbild von D0. Out 1 wird je nach Knoten-Schaltungsanordnung 1, 2 unterschiedlich behandelt. Um die Ausgabe zur Ansteuerung der unterschiedlichen Aktuatoren einheitlich zu gestalten, d.h. ob eine Taktung vorliegt oder nicht, ist die Hardware 10 zur Taktung auf der Leiterplatte 3 mit untergebracht. Zur Einstellung der Taktung dienen Drehcodierschalter, einer zur Einstellung der anfänglichen Dauer der Vollansteuerung und einer zur Einstellung des Taktverhältnisses.

Die Umschaltung des Freilaufstromes erfolgt in an sich bekannter Weise über das TRIAC 9.

Bei den Knoten-Schaltungsanordnungen 2, die keine Hardware 10 zur Taktung aufweisen, ist Out 1 das direkte Abbild von D1.

Nach der Übertragung schaltet die Ablaufsteuerung 14 ebenfalls auf den Zustand "Horchen", da innerhalb eines dann folgenden Zeitfensters die angesprochene Knoten-Schaltungsanordnung 1, 2 die Kontrolle über den D-Bus übernimmt und ein OK entsprechend dem Zustand Low auf den D-Bus gibt. Die Ablaufsteuerung 14 erkennt hieran, daß die angesprochene Knoten-Schaltungsanordnung 1, 2 reagiert hat.

Die Dateneingabe, das Lesen, wird wie folgt abgewickelt:

Die Adressierung wird wie vorstehend beschrieben vorgenommen. Anstelle des OK-Signals wird hier der Zustand der IN-Leitung in dem oben angesprochenen Zeitfenster auf den D-Bus gelegt. Die Ablaufsteuerung 14 fragt über die Adresse 11 der Knoten-Schaltungsanordnung 1, 2 den Zustand des angeschlossenen Schalters S ab und reagiert gemäß dem zugeordneten Interpreter. Nach Ablauf der Zeitspanne TimeOut ist eine erneute Übertragung zugelassen.

Als Ausgangsschaltelemente sind Leistungstransistoren 8 zur Ansteuerung von Solenoiden EL.MAG vorgesehen. Der zweite Ausgang 6 dient z.B. zur Ansteuerung einer LED.

## Patentansprüche

1. Steuer-Einrichtung für eine Industrienähmaschine mit einer in oder am Nähmaschinenkopf angeordneten Motorsteuerung und einer in einem gesonderten Bedienteil untergebrachten Nähablaufsteuerung, wobei Bedienteil und Motorsteuerung über eine bidirektionale Schnittstelle verbunden sind, und wobei Solenoide und digitale Schalteingänge umfassende Aktoren, wie Fadenwischer, Fadenabschneider und dergleichen von der Steuerung angesteuert werden,
**dadurch gekennzeichnet,**
**dass** über die Motorsteuerung (17) das Hoch- und Herunterlaufen und die Drehzahl des Motors (19) steuerbar sind, die Ansteuerung der Aktoren gesondert hiervon über einen seriellen Bus erfolgt, wobei der serielle Bus als Bit Bit Out Bit In-Bus ausgebildet ist und eine Mehrzahl von einem Aktuator zugeordneter Knoten-Schaltungsanordnungen (1, 2) umfasst, und wobei der Bus weiterhin als 3-Draht-Bus ausgebildet ist, welcher mittels der D-Bus-Leitung von der Ablaufsteuerung (14) bedient wird, wobei das Übertragungsprotokoll aus einem Start-Bit und acht Datenbits besteht und nach der Übertragung in einem vorgegebenen Zeitfenster die jeweils angesprochene Knoten-Schaltungsanordnung (1, 2) für eine kurze Zeitspanne die Kontrolle über die D-Bus-Leitung übernimmt und im "Write"-Zustand ein "OK" überträgt, wobei im "Read"-Zustand anstelle des "OK" der Schaltzustand eines Ein/Aus-Schalters an die Ablaufsteuerung (14) zurückgesandt wird.

2. Steuer-Einrichtung nach Anspruch1,
**dadurch gekennzeichnet,**
**dass** jede Knoten-Schaltungsanordnung (1, 2) ein Knoten-Schaltungselement (IC 7), Ausgangsschaltelemente, wie Schalttransisoren (8), Relais oder dergleichen, wie DIP-Schalter (5), Drehcodierschalter oder dergleichen sowie Anschlusselemente umfasst.

3. Steuer-Einrichtung nach Anspruch 2,
**dadurch gekennzeichnet,**
**dass** die Knoten-Schaltungsanordnung (1, 2) auf einer in einem Gehäuse untergebrachten Leiterplatte (3) angeordnet ist.

4. Steuer-Einrichtung nach einem der Ansprüche 1 bis 3,
**dadurch gekennzeichnet,**
**dass** die Knoten-Schaltungsanordnung (1, 2) Taktungselemente (10) für die Soleoniode (EL.MAG) umfassen.

5. Steuer-Einrichtung nach Anspruch 4,
**dadurch gekennzeichnet,**
**dass** ein Teil der Knoten-Schaltungsanordnungen (1, 2) Taktungselemente (10) für Solenoide mit höherer Leistung und ein anderer Teil Taktungselemente (10) für Solenoide geringerer Leistung, die mit ständiger Vollansteuerung betreibbar sind, ausweist.

6. Steuer-Einrichtung nach Anspruch 1,
**dadurch gekennzeichnet,**
**dass** die Knoten-Schaltungsanordnungen (1, 2), direkt an den Aktuatoren montiert oder in diese integriert sind.

7. Steuer-Einrichtung nach Anspruch 1,
**dadurch gekennzeichnet,**
**dass** die Knoten-Schaltungsanordnungen (1,2) untereinander derart verbunden sind, dass der Ausgang (13) einer Knoten-Schaltungsanordnung (1,2) (N-1) mit dem Eingang (12) einer nachfolgenden Knoten-Schaltungsanordnung (1, 2) (N) verbunden ist.

8. Steuer-Einrichtung nach Anspruch 2,
**dadurch gekennzeichnet,**
**dass** das Knoten-Schaltungselement (7) als FPGA (= Field Programmable Gate Arreay) ausgebildet ist.

9. Steuer-Einrichtung nach Anspruch 6,
**dadurch gekennzeichnet,**
**dass** der Ausgang (13) der letzten Knoten-Schaltungsanordnung (2c) zur Ermöglichung einer Selbstdiagnose mit der Ablaufsteuerung (14) verbunden ist.

## Claims

1. A control system for an industrial sewing machine, comprising a motor control disposed in or on the sewing machine head; and a sewing sequence control accommodated in a separate operating unit; wherein the operating unit and motor control are interconnected by a bi-directional interface; and wherein actors, which comprise solenoids and digital circuit inlets, such as thread breakers, thread cutters and the like are triggered by the control system; **characterized**
**in that** run-up and reduction of speed of the motor (19) are triggerable by the motor control (17); in that triggering the actors takes place separately via a serial bus, wherein the serial bus is a bit bit out bit in bus and comprises a plurality of node circuit arrangements (1, 2) which are allocated to an actuator, and wherein the bus is a three wire bus which is operated by the sequence control (14) by means of the D bus line, wherein the transmission protocol is comprised of a start bit and eight data bits, and wherein after transmission in a given time window, the respectively mentioned node circuit arrangement (1, 2) assumes control of the D bus line for a short period and transmits "OK" in the write condition, with the switching condition of an on/off switch being re-transmitted to the sequence control (14) in the read condition instead of the "OK".

2. A control system according to claim 1, **characterized**
**in that** each node circuit arrangement (1, 2) comprises a node circuit element (IC 7), outlet switching elements such as switching transistors (8), relays or the like, such as DIP switches (5), rotary coding switches or the like as well as connecting elements.

3. A control system according to claim 2, **characterized**
**in that** the node circuit arrangement (1, 2) is disposed on a circuit board (3) which is accommodated in a casing.

4. A control system according to one of claims 1 to 3, **characterized**
**in that** the node circuit arrangements (1, 2) comprise clocking elements (10) for the solenoids (ELMAG).

5. A control system according to claim 4, **characterized**
**in that** a part of the node circuit arrangements (1, 2) comprises clocking elements (10) for solenoids of higher capacity and another part clocking elements (10) for solenoids of lower capacity that are actuated by permanent full triggering.

6. A control system according to claim 1, **characterized**
**in that** the node circuit arrangements (1, 2) are mounted directly on the actuators or integrated therein.

7. A control system according to claim 1, **characterized**
**in that** the node circuit arrangements (1, 2) are interconnected such that the outlet (13) of a node circuit arrangement (1, 2) (N-1) is connected to the inlet (12) of a subsequent node circuit arrangement (1, 2) (N).

8. A control system according to claim 2, **characterized**
**in that** the node circuit arrangement (7) is designed as an FPGA (= field programmable gate array).

9. A control system according to claim 6, **characterized**
**in that** the outlet (13) of the last node circuit arrangement (2c) is connected to the sequence control (14) for self-diagnosis to be possible.

## Revendications

1. Système de commande pour une machine à coudre industrielle comprenant une commande de moteur disposée dans ou sur le sommet de la machine à coudre et une commande séquentielle de couture logée dans une partie de commande séparée, la partie de commande et la commande de moteur étant reliées par une interface bidirectionnelle, et les actionneurs comprenant des solénoïdes et des entrées de commutation numériques, comme des casse-fil, des coupe-fil et similaires étant amorcés par la commande,
**caractérisé en ce que**
l'accélération et la décélération et le régime du moteur (19) peuvent être contrôlés par la commande de moteur (17), l'amorçage des actionneurs s'effectue séparément au moyen d'un bus série, le bus série étant conçu comme un bus Bit Bit Out Bit In et comprend un grand nombre de dispositifs de commutation de noeuds (1, 2) attribués à un actionneur, et le bus étant conçu également comme un bus à trois fils, qui est actionné au moyen de la ligne de bus D par la commande séquentielle (14), le protocole de transmission comprenant un bit de démarrage et huit bits de données et après la transmission dans une fenêtre de temps prédéfinie, le dispositif de commutation de noeuds (1, 2) respectivement concerné assumant le contrôle par la ligne de bus D pour un court laps de temps et transmettant un "OK" dans l'état "Write", l'état de commutation d'un interrupteur marche-arrêt étant renvoyé à la commande séquentielle (14) dans l'état "Read" au lieu du "OK".

2. Système de commande selon la revendication 1,
**caractérisé en ce que**
chaque dispositif de commutation de noeuds (1, 2) comprend un élément de commutation de noeuds (IC 7), des éléments de commutation de sortie, comme des transistors de commutation (8), des relais ou similaires, comme des interrupteurs DIP (5), des interrupteurs de codage tournants ou similaires ainsi que des éléments de raccordement.

3. Système de commande selon la revendication 2,
**caractérisé en ce que**
le dispositif de commutation de noeuds (1, 2) est disposé sur une carte imprimée (3) logée dans un boîtier.

4. Système de commande selon l'une quelconque des revendications 1 à 3,
**caractérisé en ce que**
le dispositif de commutation de noeuds (1, 2) comprend des éléments de synchronisation (10) pour les solénoïdes (ELMAG).

5. Système de commande selon la revendication 4,
**caractérisé en ce que**
une partie des dispositifs de commutation de noeuds (1, 2) comprend des éléments de synchronisation (10) pour des solénoïdes avec une puissance assez élevée et une autre partie des éléments de synchronisation (10) pour des solénoïdes de puissance assez faible, qui peuvent être exploités avec une commande d'amorçage totale constante.

6. Système de commande selon la revendication 1,
**caractérisé en ce que**
les dispositifs de commutation de noeuds (1, 2) sont montés directement sur les actionneurs ou sont intégrés à ceux-ci.

7. Système de commande selon la revendication 1,
**caractérisé en ce que**
les dispositifs de commutation de noeuds (1, 2) sont reliés entre eux de telle sorte que la sortie (13) d'un dispositif de commutation de noeuds (1, 2) (N-1) est reliée à l'entrée d'un dispositif consécutif de commutation de noeuds (1, 2) (N).

8. Système de commande selon la revendication 2,
**caractérisé en ce que**
l'élément de commutation de noeuds (7) est conçu comme un FPGA (= Field Programmable Gate Array).

9. Système de commande selon la revendication 6,
**caractérisé en ce que**
la sortie (13) du dernier dispositif de commutation de noeuds (20) est reliée à la commande séquentielle (14) pour permettre un autodiagnostic.
